Europäisches Patentamt

European Patent Office

Office européen des brevets

(19)

(11) Numéro de publication: **0 289 398**
**B1**

(12) **FASCICULE DE BREVET EUROPEEN**

(45) Date de publication du fascicule du brevet:
18.07.90

(51) Int. Cl.⁵: **B60T 13/14, B60T 8/44**

(21) Numéro de dépôt: **88400969.7**

(22) Date de dépôt: **21.04.88**

(54) Dispositif de freinage hydraulique pour véhicule automobile.

(30) Priorité: **28.04.87 FR 8705974**

(43) Date de publication de la demande:
**02.11.88 Bulletin 88/44**

(45) Mention de la délivrance du brevet:
**18.07.90 Bulletin 90/29**

(84) Etats contractants désignés:
**DE ES FR GB IT**

(56) Documents cités:
**EP-A- 0 147 255**
**FR-A- 2 485 458**

(73) Titulaire: **BENDIX France Société Anonyme dite:,
126, rue de Stalingrad, F-93700 Drancy(FR)**

(72) Inventeur: **Tourneur, Roger, 2, rue Jules Vallée,
F-77340 Pontault Combault(FR)**
Inventeur: **Vasselet, Joel, 38 bis, Boulevard Chilpéric,
F-77500 Chelles(FR)**

(74) Mandataire: **Lejet, Christian et al, BENDIX FRANCE
Division Technique Service Brevets Bendix
Europe 126 rue de Stalingrad, F-93700 Drancy(FR)**

## Description

La présente invention est relative à un dispositif de freinage hydraulique, notamment pour véhicule automobile et, plus particulièrement, à un tel dispositif équipé de moyens permettant d'assurer la sécurité du fonctionnement du dispositif en cas de défaillance d'une source fournissant un fluide haute pression d'assistance au freinage.

On connaît du brevet français 2 554 875 un amplificateur hydraulique de freinage comprenant un corps, un premier élément déplaçable dans le corps sous l'effet de l'actionnement d'une pédale de frein, entre une première position faisant communiquer une première chambre reliée à un circuit de freinage et à l'intérieur du corps avec un réservoir basse pression, et isolant cette chambre d'une source haute pression, et une deuxième position isolant la chambre du réservoir basse pression. Cet amplificateur hydraulique comprend une deuxième chambre formée dans le corps, un circuit faisant communiquer cette deuxième chambre avec le réservoir basse pression, et un moyen de clapet sensible à la pression de la source haute pression fermant normalement ce circuit sous l'effet de la pression de la source haute pression. En cas de défaillance du circuit haute pression, cet amplificateur fonctionne comme un maître-cylindre normal. Il est de structure monobloc et, de ce fait, il est destiné à s'intégrer à un dispositif de freinage conçu pour le recevoir et non à un dispositif comprenant un maître-cylindre et un distributeur de pression hydraulique individualisé, de types connus en eux-mêmes.

La présente invention a donc pour but de réaliser un dispositif de freinage hydraulique équipé de moyens assurant une sécurité de freinage en cas de défaillance du circuit haute pression, ces moyens étant conçus pour s'intégrer simplement au dispositif quand celui-ci comprend un maître-cylindre et un distributeur de pression d'assistance individualisés et connus en eux-mêmes.

On atteint ce but de l'invention avec un dispositif de freinage hydraulique comprenant un maître-cylindre commandé par une pédale, un circuit de freinage alimentant au moins un moteur de frein, un distributeur de fluide d'assistance alimenté par un circuit de fluide haute pression et commandé par le maître-cylindre pour connecter ce circuit de fluide au circuit de freinage quand la pédale est actionnée, et un moyen de valve interconnectant le maître-cylindre, le distributeur et le circuit de freinage pour isoler le circuit de freinage du circuit haute pression en cas de défaillance de ce circuit et pour connecter alors directement le circuit de freinage au maître-cylindre. Suivant l'invention, le moyen de valve comprend une première valve connectée au maître-cylindre, au circuit de freinage, et à une entrée de commande du distributeur pour, dans un premier état, raccorder le maître-cylindre à cette entrée de commande et isoler le maître-cylindre du circuit de freinage et, dans un deuxième état raccorder le maître-cylindre au circuit de freinage et isoler l'entrée de commande du distributeur du maître-cylindre, une deuxième valve connectée à une sortie de fluide haute pression du distributeur et au circuit de freinage pour, dans un premier état, raccorder cette sortie au circuit de freinage et pour, dans un deuxième état, isoler ce circuit de cette sortie, ces deux valves étant commandées par le circuit de fluide haute pression pour passer simultanément de leur premier état à leur deuxième état en cas de défaillance de ce circuit.

Au dessin annexé, donné seulement à titre d'exemple :

- la Figure 1 est une représentation schématique du dispositif de freinage suivant l'invention, et
- la Figure 2 est une vue en coupe axiale d'un moyen de valve incorporé au dispositif de la figure 1.

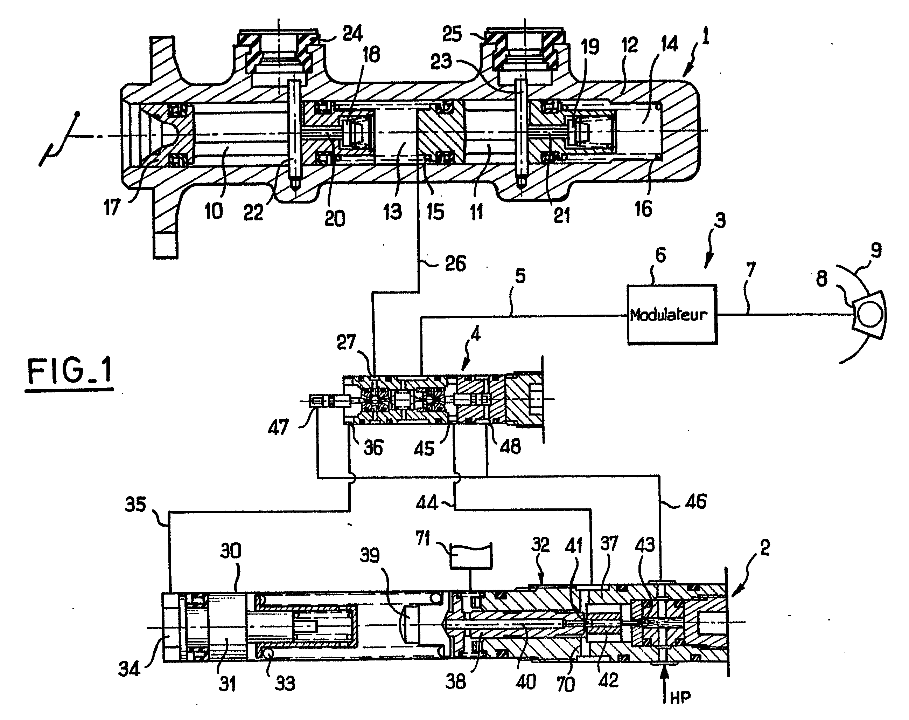

On se réfère à la figure 1 du dessin où l'on a représenté de façon schématique le dispositif de freinage suivant l'invention, qui comprend essentiellement un maître-cylindre "tandem" 1, un distributeur de pression d'assistance 2 du type connu sous le nom de "full power" et un circuit de freinage 3, interconnectés par un moyen de valve 4. Le circuit de freinage 3 comprend une ligne 5 partant du moyen de valve 4 pour alimenter, à travers un groupe modulateur 6 et une autre ligne 7, un moteur de frein 8 agissant sur une roue 9 d'un véhicule automobile par exemple. Pour la clarté du dessin on n'a représenté qu'un seul moteur de frein mais il est bien clair que la ligne 5 pourrait alimenter classiquement deux moteurs de frein associés chacun à deux roues croisées du véhicule par exemple. Comme il est bien connu, le maître-cylidre "tandem" 1 peut alimenter deux circuits de freinage croisés, bien qu'un seul de ces circuits soit partiellement représenté au dessin.

Le maître-cylindre 1 est d'un type connu et comprend deux pistons alignés 10 et 11 délimitant dans un corps 12 deux chambres de pression 13 et 14. Des ressorts 15 et 16 fonctionnent en compression dans ces chambres 13 et 14 respectivement. Les pistons 10 et 11 peuvent être déplacés vers la droite (du point de vue de la Figure 1) par une pédale de frein agissant sur un embout mobile 17 formé à l'extrémité gauche du piston 10 pour se déplacer dans un alésage percé dans le corps 12. Des clapets 18 et 19 sont portés par les pistons 10 et 11 respectivement, ces clapets étant maintenus ouverts par des goupilles 22,23 sur lesquelles butent des queues 20,21 des clapets 18,19 respectivement, lorsque les pistons occupent leur position de repos représentée à la figure, alors qu'aucune action n'est exercée sur la pédale de frein. Les chambres 13 et 14 sont ainsi mises en communication avec des réservoirs de fluide de freinage basse pression montés sur des sièges 24, 25 respectivement. Une ligne 26 raccorde la chambre 13 à une entrée 27 du moyen de valve 4. De même, et bien que cela ne soit pas représenté au dessin, la chambre 14 pourrait être raccordée à un autre moyen de valve indentique au moyen de valve 4, pour l'alimentation d'un deuxième circuit de freinage associé aux deux autres roues du véhicule.

Le distributeur de fluide d'assistance 2 est aussi d'un type connu. Il comprend essentiellement un corps percé d'un alésage 30 dans lequel sont placés en ligne un piston de commande 31 et un moyen de piston 32. Un ressort 33 est placé dans une chambre intermédiaire entre ces deux organes pour charger ceux-ci à l'écart l'un de l'autre. Une chambre 34 placée à gauche du piston 31 dans l'alésage 30 est raccordée par une ligne 35 à un orifice 36 du moyen de valve 4. Le piston de commande 31 est mobile axialement dans l'alésage 30 sous l'action d'une pression établie dans la chambre 34 et communiquée par la ligne 35, pression en provenance du maître-cylindre 1, comme on l'expliquera en plus de détail dans la suite. Les déplacements du piston de commande sont transmis au moyen de piston 32 par le ressort 33 qui présente une grande raideur. Le moyen de piston 32 est lui-même constitué d'un fourreau fixe 37 et d'un tiroir mobile 38 mobile dans ce fourreau sous l'action du piston de commande, action appliquée par le ressort 33 à un appui rotulé 39 qui s'appuie sur l'extrémité gauche du tiroir 38. Le tiroir 38 est lui-même percé axialement d'un canal 40. Ce canal 40 débouche à son extrémité droite, du point de vue de la figure, en face d'une bille 41 portée par un noyau à aiguille 42 mobile suivant l'axe de l'alésage 30. Un clapet d'admission à billes 43 est placé en ligne avec l'aiguille du noyau 42, dans l'alésage 30.

Le circuit de fluide haute pression du dispositif suivant l'invention comprend une source de fluide haute pression HP qui alimente un orifice d'entrée du distributeur 2. Cet orifice débouche dans le clapet d'admission 43, qui est normalement fermé par une bille chargée par un ressort. Comme on le verra plus loin en détail, lorsqu'on exerce une pression sur la pédale de frein, la pression du fluide dans la chambre 34 augmente, ce qui a pour effet de déplacer vers la droite le piston de commande 31 et le tiroir 38 qui repousse alors, par l'intermédiaire de la bille 41, le noyau à aiguille 42, l'aiguille de ce noyau écartant la bille du clapet 43 de son siège pour mettre en communication la source de haute pression avec une ligne 44 raccordée à un orifice 45 du moyen de valve 4.

Le circuit de fluide haute pression du dispositif suivant l'invention comprend encore une ligne 46 raccordée, à travers le côté haute pression du clapet 43, à la source de haute pression HP. La ligne 46 est connectée à deux orifices 47 et 48 du moyen de valve 4.

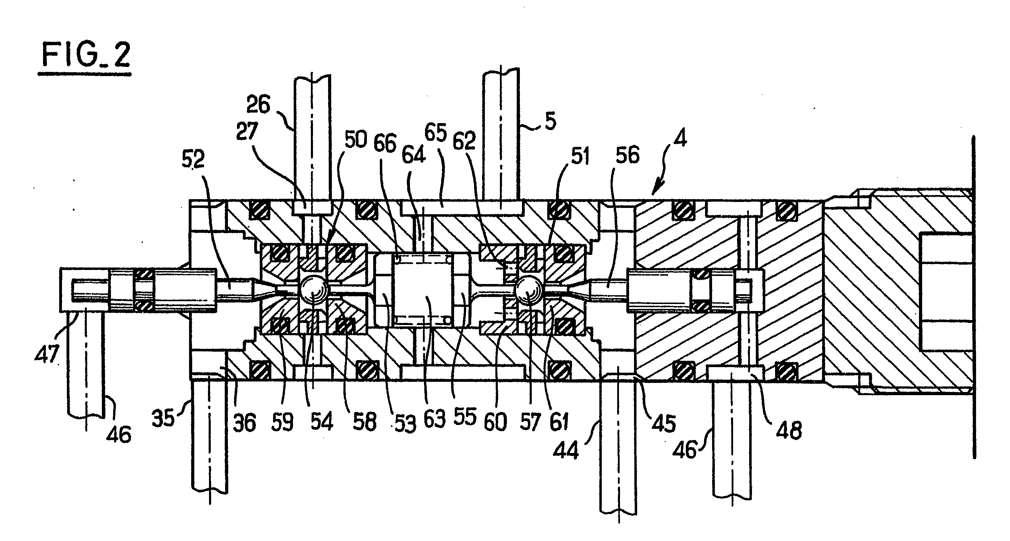

On se réfère maintenant à la figure 2 pour décrire plus en détail le moyen de valve 4 qui interconnecte le maître-cylindre, le distributeur et le circuit de freinage du dispositif suivant l'invention. Le moyen de valve 4 comprend essentiellement des première et deuxième valves à billes 50, 51 respectivement, des poussoirs 52 et 53 agissant en sens inverse sur la bille 54 de la valve 50 tandis que des poussoirs 55 et 56 agissent également en sens inverse sur la bille 57 de la valve 51. La valve 50 se trouve ainsi dans un premier état quand le poussoir 52 appuie la bille 54 contre un siège 58 alors que cette valve se trouve dans un deuxième état quand le poussoir 53 appuie la bille 54 sur un siège 59. De même la deuxième valve 51 se trouve dans un premier état quand le poussoir 56 appuie la bille 57 sur un siège 60 alors que cette valve se trouve dans un deuxième état quand le poussoir 55 appuie cette bille sur un siège 61.

La ligne 46 alimente avec un fluide haute pression des chambres situées en regard des extrémités des poussoirs 52 et 56 qui n'agissent pas sur les billes des valves. Ainsi, lorsqu'il règne une haute pression dans la ligne 46, les valves 50 et 51 se trouvent dans leur premier état. Dans cet état la ligne 26 communique avec la ligne 35 à travers le siège 59 de la valve 50 tandis que la ligne 44 communique avec la ligne 5 par le siège 61 et des ouvertures 62 du siège 60 de la valve 51, une chambre 63 où coulissent les poussoirs 53,55 et un conduit 64 qui débouche dans une chambre annulaire 65 creusée dans le corps du moyen de valve, chambre à laquelle est raccordée la ligne 5 d'alimentation du circuit de freinage.

Un ressort 66 placé dans la chambre 63 tend à écarter les poussoirs 53 et 55 l'un de l'autre pour que ceux-ci repoussent les billes 54 et 57 contre les sièges 59 et 61, respectivement. Quand la pression du fluide dans la ligne 46 tombe en dessous d'une valeur prédéterminée, ce qui est significatif d'une défaillance du circuit haute pression dûe par exemple à une défaillance de la source elle-même ou de fuites dans le circuit, la charge développée par les poussoirs 53 et 55 sur les billes 54 et 57, respectivement, surpasse celle développée sur ces mêmes billes par les poussoirs 52 et 56. Les billes 54 et 57 obturent alors les sièges 59 et 61. Les valves 50 et 51 sont alors dans leur deuxième état pour lequel la ligne 26 allant au maître-cylindre est coupée de la ligne 35 qui alimente le distributeur 2 alors que la ligne 44 venant du distributeur est coupée de la ligne 5 d'alimentation du circuit de freinage. Par contre, les lignes 26 et 5 sont raccordées l'une à l'autre par l'intermédiaire de l'orifice du siège 58, de la chambre 63, du conduit 64 et de la chambre annulaire 65. Ainsi, le maître-cylindre est-il directement connecté au circuit de freinage en cas de défaillance du circuit haute pression.

On décrit maintenant le fonctionnement du dispositif de freinage hydraulique suivant l'invention. Lorsqu'on appuie sur la pédale de frein et que la pression dans le circuit haute pression est supérieure à la valeur prédéterminée, la pression dans la chambre 13 du maître-cylindre 1 est transmise par les lignes 26 et 35 à la chambre 34 du distributeur 2, pour déplacer alors le piston de commande 31 et le tiroir 38 qui déplace à son tour le noyau à aiguille 42 vers la droite pour ouvrir le clapet 43. Le fluide haute pression venu de la source HP passe alors dans la ligne 44. Simultanément, le même fluide haute pression actionne par la ligne 46 les poussoirs 52 et 56 qui maintiennent les valves 50 et 51 dans leur premier état. Dans cet état, comme on l'a vu plus haut, les lignes 26 et 35 communiquent ainsi que les lignes 44 et 5. La haute pression d'assistance fournie par le distributeur 2 au moyen de valve 4 est ainsi transmise sur la ligne 5 pour actionner normalement le circuit de freinage à travers le groupe modulateur 6, dans le cas où, par exemple, le dispositif de freinage est équipé d'un système d'anti-patinage et, de là, le moteur de frein 8.

Lorsqu'on relâche la pression sur la pédale de frein, les pistons 10 et 11 du maître-cylindre 1 reculent vers la gauche, du point de vue de la Figure 1, ce qui a pour effet de rouvrir les clapets 18 et 19, la pression du fluide dans la chambre 13 tombant alors et cette pression étant transmise par les lignes 26 et 35 à la chambre 34 du distributeur. Le piston de commande 31 recule alors vers la gauche ainsi que le tiroir 38, ce qui permet au noyau à aiguille 42 de venir en butée contre une surface transversale 70 du fourreau 37, la bille 41 s'écartant alors du débouché adjacent du canal 40. Ce canal met alors en communication les lignes 5 et 44 avec un réservoir de fluide basse pression 71 pour que la pression dans le circuit de freinage puisse retomber.

Suivant l'invention, en cas de défaillance du circuit haute pression, la pression dans la ligne 46 tombe en dessous de la valeur prédéterminée. Les poussoirs 52 et 56 ne sont plus alors chargés contre les billes 54 et 57 avec une force suffisante pour qu'elle soit maintenue contre les sièges 58 et 60 respectivement, contre l'action des poussoirs 53 et 55. Ceux-ci plaquent alors les billes 54 et 57 contre les sièges 59, 61. Les valves 50, 51 sont alors dans leur deuxième état correspondant à la mise en communication des lignes 26 et 5 par l'orifice du siège 58, la chambre 63, le conduit 64 et la chambre annulaire 65. Simultanément, les lignes 35 et 44 sont coupées.

Si le conducteur exerce alors une pression sur la pédale de frein, le maître-cylindre agira directement sur le circuit de freinage en se substituant ainsi au distributeur 2 de fluide d'assistance haute pression, alors défaillante.

La présente invention fournit ainsi un dispositif de freinage assisté équipé d'un moyen de valve individualisé capable d'assurer la sécurité du fonctionnement du dispositif en cas de défaillance du circuit haute pression. Ce moyen de valve peut être installé par simple adjonction dans un dispositif de freinage assisté à maître-cylindre et distributeur de fluide d'assistance haute pression. Il convient tout particulièrement à un tel dispositif équipé en outre d'un système d'antipatinage des roues du véhicule.

## Revendications

1. Dispositif de freinage hydraulique comprenant un maître-cylindre (1) commandé par une pédale, un circuit de freinage (3) alimentant au moins un moteur de frein, un distributeur de fluide d'assistance (2) alimenté par un circuit de fluide haute pression (HP) et commandé par le maître-cylindre (1) pour connecter ce circuit de fluide (HP) au circuit de freinage (3) quand la pédale est actionnée, et un moyen de valve (4) interconnectant le maître-cylindre (1), le distributeur (2) et le circuit de freinage (3) pour isoler le circuit de freinage (3) du circuit haute pression (HP) en cas de défaillance de ce circuit (HP) et pour connecter alors directement le circuit de freinage (3) au maître-cylindre (1), dispositif caractérisé en ce que ce moyen de valve (4) comprend une première valve (50) connectée au maître-cylindre (1), au circuit de freinage (5, 6, 7, 8) et à une chambre (34) de commande du distributeur (2), pour, dans un premier état, raccorder le maître-cylindre (1) à cette chambre (34) de commande et isoler le maître-cylindre (1) du circuit de freinage (3) et, dans un deuxième état, raccorder le maître-cylindre (1) au circuit de freinage (3) et isoler la chambre (34) de commande du distributeur (2), du maître-cylindre (1), une deuxième valve (51) connectée à une ligne (44) de fluide haute pression venu du distributeur et au circuit de freinage (3) pour, dans un premier état, raccorder cette ligne (44) au circuit de freinage et pour, dans un deuxième état, isoler ce circuit (3) de cette ligne (44), ces deux valves étant commandées par le circuit de fluide haute pression pour passer simultanément de leur premier état à leur deuxième état en cas de défaillance de ce circuit.

2. Dispositif conforme à la revendication 1, caractérisé en ce que les valves (50, 51) comprennent chacune une bille (54, 57) mobile entre des premier (58, 60) et deuxième (59, 61) sièges qui reçoivent la bille (54, 57) quand la valve (50, 51) associée est dans son premier ou deuxième état, respectivement.

3. Dispositif conforme à la revendication 2, caractérisé en ce que le moyen de valve (4) comprend en outre des premier (52) et deuxième (56) poussoirs actionnés par le circuit de fluide haute pression (HP) et agencés pour appliquer simultanément les billes (54, 57) contre leur premier siège quand le fluide du circuit (HP) est à un pression supérieure à une valeur prédéterminée.

4. Dispositif conforme à la revendication 3, caractérisé en ce que le moyen de valve (4) comprend en outre des troisième (53) et quatrième (55) poussoirs placés entre les deux billes et chargés par un ressort (66) installé entre ces poussoirs pour qu'ils agissent sur les billes (54, 57) de manière à les plaquer sur leur deuxième siège (59, 61) en surmontant les forces développées sur ces billes (54, 57) par les premier (52) et deuxième (56) poussoirs quand la pression du fluide actionnant ces derniers tombe en dessous de la valeur prédéterminée.

5. Dispositif conforme à la revendication 4, caractérisé en ce que les poussoirs (52, 53, 55, 56) et les valves (50, 51) du moyen de valve (4) sont réunis dans un corps cylindrique dont l'axe porte les lignes d'action des poussoirs sur les billes.

## Patentanspüche

1. Hydraulische Bremsvorrichtung, welche umfaßt: einen Hauptzylinder (1), der durch ein Pedal gesteuert wird, einen Bremskreis (3), der wenigstens einen Bremsantrieb versorgt, einen Verteiler (2) für das Servo-Fluid, der über einen Kreis eines Hochdruck-Fluids (HP) versorgt und durch den Hauptzylinder (1) gesteuert wird, um diesen Fluid-Kreis (HP) an den Bremskreis (3) anzuschließen, wenn das Pedal betätigt wird, sowie ein Ventilmittel (4) umfaßt, das den Hauptzylinder (1), den Verteiler (2) und den Bremskreis (3) miteinander verbindet, um den Bremskreis (3) von dem Hochdruck-Kreis (HP) im Falle eines Ausfallens dieses Kreises (HP) zu trennen und um dann den Bremskreis (3) unmittelbar an den Hauptzylinder (1) anzuschließen, wobei die Vorrichtung dadurch gekennzeichnet ist, daß dieses Ventilmittel (4) umfaßt: ein erstes Ventil (50), das an den Hauptzylinder (1), an den Bremskreis (5, 6, 7, 8) sowie an eine Kammer (34) zur Steuerung des Verteilers (2) angeschlossen ist, um in einem ersten Zustand den Hauptzylinder (1) mit dieser Steuerkammer (34) zu verbinden und den Hauptzylinder (1) von dem Bremskreis (3) zu trennen sowie in einem zweiten Zustand den Hauptzylinder (1) mit dem Bremskreis (3) zu verbinden und die Kammer (34) zur Steuerung des Verteilers (2) von dem Hauptzylinder (1) zu trennen; ein zweites Ventil (51), das an eine Leitung (44) für das aus dem Verteiler kommende Hochdruck-Fluid sowie an den Bremskreis (3) angeschlossen ist, um in einem ersten Zustand diese Leitung (44) mit dem Bremskreis zu verbinden und in einem zweiten Zustand diesen Kreis (3) von dieser Leitung (44) zu trennen, wobei diese beiden Ventile von dem Kreis des Hochdruck-Fluids gesteuert sind, um gleichzeitig bei Ausfallen dieses Kreises von ihrem ersten Zustand in ihren zweiten Zustand überzugehen.

2. Vorrichtung nach Anspruch 1, dadurch gekennzeichnet, daß jedes der Ventile (50, 51) eine zwischen einem ersten Sitz (58, 60) und einem zweiten Sitz (59, 61) bewegliche Kugel (54, 57) umfaßt, die die Kugel (54, 57) aufnehmen, wenn das zugeordnete Ventil (50, 51) sich in seinem ersten Zustand bzw. in seinem zweiten Zustand befindet.

3. Vorrichtung nach Anspruch 2, dadurch gekennzeichnet, daß das Ventilmittel (4) ferner einen ersten Stößel (52) sowie einen zweiten Stößel (56) umfaßt, die durch den Kreis des Hochdruck-Fluids (HP) betätigt werden und so angeordnet sind, daß die Kugeln (54, 57) gleichzeitig gegen ihren ersten Sitz aufgedrückt werden, wenn das Fluid des Kreises einen Druck, der größer als ein vorbestimmter Wert ist, aufweist.

4. Vorrichtung nach Anspruch 3, dadurch gekennzeichnet, daß das Ventilmittel (4) ferner einen dritten Stößel (53) sowie einen vierten Stößel (55) umfaßt, die zwischen beiden Kugeln angeordnet und durch eine Feder (66) beansprucht sind, die zwischen diesen Stößeln montiert ist, damit sie auf die Kugeln (54, 57) derart einwirken, daß sie gegen ihren zweiten Sitz (59, 61) aufgedrückt werden, wobei sie die auf diese Kugeln (54, 57) von dem ersten Stößel (52) sowie von dem zweiten Stößel (56) ausgeübten Kräfte überwinden, wenn der Druck des Fluids, der diese betätigt, unter den vorbestimmten Wert fällt.

5. Vorrichtung nach Anspruch 4, dadurch gekennzeichnet, daß die Stößel (52, 53, 55, 56) und die Ventile (50, 51) des Ventilmittels (4) in einem zylindrischen Körper vereinigt sind, dessen Achse die Wirkungslinien der Stößel auf die Kugeln trägt.

## Claims

1. Hydraulic braking device comprising a master cylinder (1) controlled by a pedal, a braking circuit (3) supplying at least one brake motor, a booster fluid distributor (2) supplied by a high pressure fluid circuit (HP) and controlled by the master cylinder (1) to connect this fluid circuit (HP) to the braking circuit (3) when the pedal is actuated, and a valve means (4) interconnecting the master cylinder (1), the distributor (2) and the braking circuit (3) to isolate the braking circuit (3) from the high pressure circuit (HP) in the event of failure of this circuit (HP) and then to connect the braking circuit (3) directly to the master cylinder (1), device characterized in that this valve means (4) comprises a first valve (50) connected to the master cylinder (1), to the braking circuit (5, 6, 7, 8) and to a control chamber (34) for the distributor (2) so as to connect, in a first state, the master cylinder (1) to this control chamber (34) for the distributor (2) so as to connect, in a first state, the master cylinder (1) to this control chamber (34) and to isolate the master cylinder (1) from the braking circuit (3), and, in a second state, to connect the master cylinder (1) to the braking circuit (3) and to isolate the control chamber (34) for the distributor (2) from the master cylinder (1), a second valve (51) connected to a pipeline (44) of high pressure fluid emanating from the distributor and to the braking circuit (3) so as to connect, in a first state, this pipeline (44) to the braking circuit and so as to isolate, in a second state, this circuit (3) from this pipeline (44), these two valves being controlled by the high pressure fluid circuit to pass simultaneously from their first state to their second state in the event of failure of this circuit.

2. Device according to claim 1, characterized in that the valves (50, 51) each comprise a ball (54, 57) movable between the first (58, 60) and the second (59, 61) seats which receive the ball (54, 57) when the associated valve (50, 51) is in its first or second state respectively.

3. Device according to claim 2, characterized in that the valve medium (4) also comprises the first (52) and the second (56) plungers actuated by the high pressure fluid circuit (HP) and arranged to push the balls (54, 57) up against their first seat simultaneously when the fluid in the circuit is at a pressure exceeding a predetermined value.

4. Device according to claim 3, characterized in that the valve medium (4) also comprises the third (53) and fourth (55) plungers located between the two balls and loaded by a spring (66) placed between these plungers so that they act on the balls (54, 57) in such a way as to hold them up against their second seat (59, 61) by overcoming the forces developed on these balls (54, 57) by the first (52) and the second (56) plungers when the fluid pressure actuating these latter falls below the predetermined value.

5. Device according to claim 4, characterized in that the plungers (52, 53, 55, 56) and the valves (50, 51) of the valve medium (4) are contained together in a cylindrical body the axis of which marks the lines of action of these plungers on these balls.

FIG_1

Modulateur

EP 0 289 398 B1

FIG. 2